# EUROPEAN PATENT APPLICATION

(11) **EP 4 797 119 A1**
(43) Date of publication of application: **26.08.2026**
(21) Application number: 25305246.8
(22) Date of filing: 25.02.2025
(51) Int. Cl.: G06F 16/27, H04L 9/00

(54) **HIERARCHICAL BLOCKCHAIN SYSTEM**

(71) Applicant: Amadeus S.A.S., 06410 Biot (FR)
(72) Inventor: BEN ROMDHANNE, Bilel, 06410 Biot (FR); BOUDIA, Mourad, 06410 Biot (FR); JERBI, Hajer, 06410 Biot (FR)
(74) Representative: Samson & Partner Patentanwälte mbB

(57) **Abstract**

A hierarchical blockchain system is provided. The hierarchical blockchain system comprises: a plurality of blockchains and associated databases having a hierarchical relationship, wherein the plurality of blockchains, amongst hierarchical levels of the hierarchical relationship, are associated via one or more respective identifier types; and one or more computing devices configured to: populate the plurality of blockchains and the associated databases; and validate the plurality of blockchains. The plurality of blockchains are associated with different sets of validation mechanisms. Respective blockchains that are higher in the hierarchical relationship are associated with stricter validation mechanisms and further respective blockchains that are lower in the hierarchical relationship are associated with lighter validation mechanisms. The lighter validation mechanisms are more fault tolerant than the stricter validation mechanisms.

## Description

### FIELD

The specification relates generally to the blockchains, and specifically to a hierarchical blockchain system.

### BACKGROUND

Blockchain technology has emerged as a powerful tool for enhancing security, transparency, and decentralization in various industries. However, existing blockchain architectures present several limitations when applied to certain data-intensive industries. These limitations arise from the inherent challenges related to scalability, interoperability, and advanced data search features.

### SUMMARY

An aspect of the present specification provides a system comprising: a plurality of blockchains and associated databases having a hierarchical relationship, wherein the plurality of blockchains, amongst hierarchical levels of the hierarchical relationship, are associated via one or more respective identifier types; and one or more computing devices configured to: populate the plurality of blockchains and the associated databases; and validate the plurality of blockchains, wherein the plurality of blockchains are associated with different sets of validation mechanisms, wherein respective blockchains that are higher in the hierarchical relationship are associated with stricter validation mechanisms and further respective blockchains that are lower in the hierarchical relationship are associated with lighter validation mechanisms, and wherein the lighter validation mechanisms are more fault tolerant than the stricter validation mechanisms.

A highest level blockchain of the plurality of blockchains and one or more highest level associated databases in the hierarchical relationship may respectively store main transactions and respective associated main transaction information.

A second highest level blockchain of the plurality of blockchains and one or more second highest level associated databases in the hierarchical relationship may respectively stores updates to main transactions of a highest level blockchain and respective associated updated main transaction information.

A third highest level blockchain of the plurality of blockchains and one or more third highest level associated databases in the hierarchical relationship may respectively stores management transactions associated with main transactions of a highest level blockchain and respective associated management transaction information.

A fourth highest level blockchain of the plurality of blockchains and one or more fourth highest level associated databases in the hierarchical relationship may respectively stores application transactions associated with main transactions of a highest level blockchain and respective associated application transaction information.

The one or more computing devices may be further configured to: first add a blockchain transaction to an associated blockchain of the plurality of blockchains; and add information associated with the blockchain transaction to a respective database only after the blockchain transaction is validated.

The one or more computing devices may include one or more orchestrator computing devices dedicated to populating second highest level blockchains of the plurality of blockchains and one or more second highest level associated databases in the hierarchical relationship with updates to main transactions of a highest level blockchain and respective associated updated main transaction information.

A portion of blockchains of third highest level blockchains of the plurality of blockchains may be dedicated to smart contracts between different entities that originate blockchain transactions.

The system may further comprise given blockchains associated with smart contracts that are not a part of the hierarchical relationship.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a hierarchical blockchain system, according to non-limiting examples.
FIG. 2 depicts a computing device that shows the structure of computing devices of the hierarchical blockchain system of FIG. 1, according to non-limiting examples.
FIG. 3 depicts an example of multi-sharding in a blockchain, according to non-limiting examples.

### DETAILED DESCRIPTION

Traditional blockchain systems often struggle to handle the high volume of transactions required by certain industries with intensive data-processing needs, such as the travel industry. These systems face significant performance bottlenecks as transaction volumes increase, resulting in slower processing times and limited throughput. As the demand for real-time processing in travel applications grows, this limitation becomes increasingly problematic. Certain technical problems with blockchain systems is next described.

Interoperability between blockchains has emerged as a challenging problem, for example in the travel industry. For example, the fragmented nature of blockchain solutions within the travel industry poses a challenge to seamless data integration and communication. Different travel companies may employ various blockchain systems, making it difficult to synchronize data efficiently across platforms. This lack of interoperability restricts the industry's ability to leverage blockchain's full potential for improving processes such as data management, ticketing, and payment systems.

Advanced search capabilities for blockchains has also emerged as challenge. This limitation is particularly problematic for industries like travel, where vast amounts of transactional and operational data must be searchable in a flexible and efficient manner. Current blockchain solutions deliberately do not support advanced search features that could allow industry participants to locate and manage transactions using more granular search criteria, such as customer identifiers or specific transaction details, for example to avoid complexity and which may lead to slower response times.

Indeed, at least such lack of interoperability and advanced search capabilities lead to a challenge with scaling blockchain systems in data intensive industries, such as travel, where millions of data sets may be stored daily in databases, and modified by third party providers.

Given these challenges, there is a need for an innovative blockchain architecture that meet the needs of industries with intensive data-processing needs. A solution is required that can provide interoperability to facilitate seamless integration across different platforms, advanced search capabilities to efficiently manage the industry's complex data requirements, and scalability to accommodate growing transaction volumes.

Hence, provided herein is a system that includes hierarchical blockchains that vary in validation strictness depending on their hierarchical level. The association of different validation mechanisms with hierarchical levels and the focus on balancing fault tolerance with validation strictness introduces a non-conventional and non-generic structure to the system. For example, use of lighter validation mechanisms at lower levels for more fault tolerance and stricter validation mechanisms at higher levels may provide a specific and useful improvement to blockchain technology.

Furthermore, it is understood that, in generic blockchain terminology, a term for a blockchain entry may be "transaction" and/or "blockchain transaction", which comprises data representing an event, such as a transfer of information between devices in a network. Put another way, the term "transaction" as used herein is understood to define an exchange of data and/or information between devices.

Furthermore, in the following discussion, reference will be made to nodes and actors, which may be understood as follows. In particular, a node may comprise a computer that represents the interest of an actor in a blockchain system, and, in contrast to a node, an actor may comprise an entity (e.g., such as a company), that participates in a process of updating a blockchain system. Furthermore, an actor may have more than one node in a blockchain system.

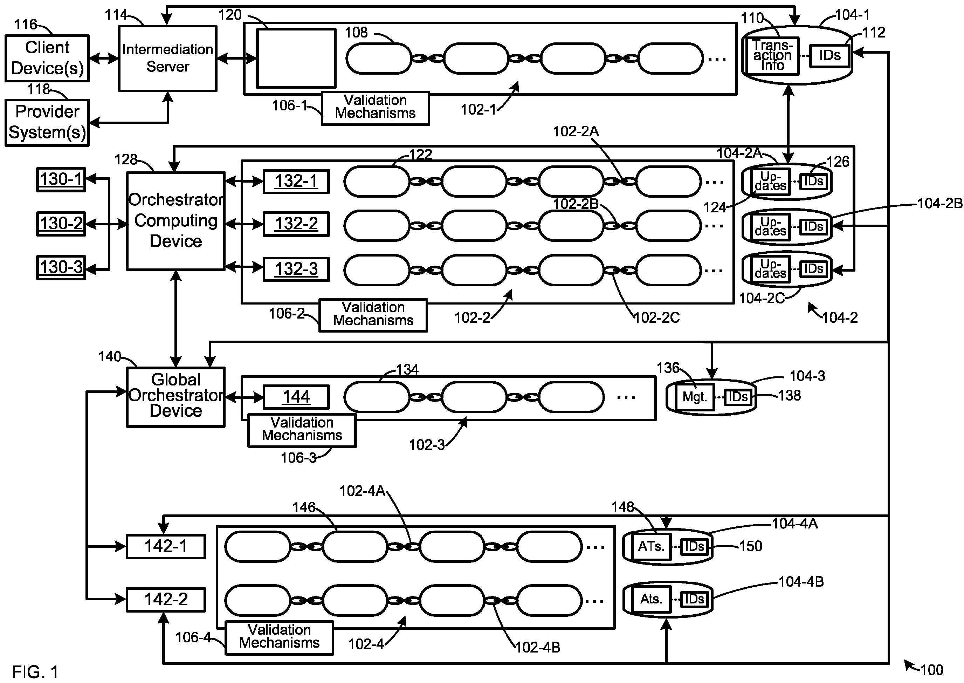

FIG. 1 depicts a hierarchical blockchain system 100. The various components of the system 100 are in communication via any suitable combination of wired and/or wireless communication links, and communication links between components of the system 100 are depicted in FIG. 1, and throughout the present specification, as double-ended arrows between respective components. The communication links may include any suitable combination of wireless and/or wired links and/or wireless and/or wired communication networks, and the like.

The system 100 comprises a plurality of blockchains 102-1, 102-2, 102-3, 102-4 and associated databases 104-1, 104-2, 104-3, 104-4 arranged in a hierarchical relationship. The plurality of blockchains102-1, 102-2, 102-3, 102-4, amongst hierarchical levels of the hierarchical relationship, may be associated via one or more respective identifier types, as described herein.

For simplicity, the plurality of blockchains 102-1, 102-2, 102-3, 102-4 are interchangeably referred to hereafter, collectively, as the blockchains 102 and, generically, as a blockchain 102. This convention will be used throughout the present specification. For example, the databases 104-1, 104-2, 104-3, 104-4 are interchangeably referred to herein as the databases 104 and/or a database 104.

Furthermore, it is understood that each set of blockchains 102 may comprise one or more respective blockchains 102. For example, as depicted, the blockchain 102-1 includes one blockchain 102, whereas the set of blockchains 102-2, comprises three blockchains 102-2A, 102-2B, 102-2C, but may comprise any suitable number of blockchains 102. Similarly, the set of blockchains 102-3, comprises one blockchain 102-3 but may comprise any suitable number of blockchains 102, and the set of blockchains 102-4, comprises two blockchains 102-4A, 102-4B, but may comprise any suitable number of blockchains 102.

The blockchains 102 may have any suitable blockchain structure, and may have a structure of a beacon chain coupled to shards, and the like, or any other suitable structure. In a particular example, the blockchains 102 may have an Ethereum^{™} blockchain structure. Similarly, the blockchains 102 may incorporate Ethereum^{™} forking.

Furthermore, as depicted, the databases 104 may be provided in a one-to-one relationship with the blockchains 102.

For example, as depicted, the blockchain 102-1 is associated with one database 104-1, and the blockchains 102-2A, 102-2B, 102-2C are associated with respective databases 104-2A, 104-2B, 104-2C. Similarly, the blockchain 102-3 is associated with a respective database 104-3, and in particular a databases 104-3. Similarly, the blockchains 102-4A, 102-4B are associated with respective databases 104-4A, 104-4B.

However, it is understood that each set of blockchains 102 and associated databases 104 may comprise as few as one blockchain 102 and one associated database 104, and there is no particular limit on a highest number of blockchains 102 and associated databases 104, though any set of blockchains 102 may comprise any suitable number of blockchains 102.

As depicted, the system 100 further comprises one or more computing devices configured to: populate the plurality of blockchains 102 and the associated databases 104; and validate the plurality of blockchains 102. Details of the computing devices are described in more detail below.

Furthermore, the plurality of blockchains 102-1, 102-2, 102-3, 102-4 are associated, respectively, with different sets of validation mechanisms 106-1, 106-2, 106-3,106-4 (e.g., sets of validation mechanisms 106 and/or a set of validation mechanisms 106).

In particular, the blockchains 102 are understood to be provided in a hierarchical relationship. For example, as depicted, the first blockchain 102-1 may comprise a highest level blockchain 102 (or a fourth lowest level) of the plurality of blockchains 102, the second blockchains 102-2 may comprise a second highest level (or a third lowest level) blockchains 102 of the plurality of blockchains 102, the third blockchains 102-3 may (optionally, as described herein) comprise a third highest level (or a second lowest level) blockchains 102 of the plurality of blockchains 102, and the fourth blockchains 102-4 may comprise a fourth highest level (or a lowest level) blockchains 102 of the plurality of blockchains 102

Respective blockchains 102 that are higher in the hierarchical relationship are associated with stricter validation mechanisms 106 and further respective blockchains 102 that are lower in the hierarchical relationship are associated with lighter validation mechanisms 106. For example, lighter validation mechanisms 106 are understood to be more fault tolerant than stricter validation mechanisms 106, and/or stricter validation mechanisms 106 are understood to be less fault tolerant than lighter validation mechanisms 106

Hence, for example, the first validation mechanisms 106-1 are less fault tolerant than the second validation mechanisms 106-2, the second validation mechanisms 106-2 are less fault tolerant than the third validation mechanisms 106-3, and the third validation mechanisms 106-3 are less fault tolerant than the fourth validation mechanisms 106-4.

Conversely, the fourth validation mechanisms 106-4 are more fault tolerant than the third validation mechanisms 106-3, the third validation mechanisms 106-3 are more fault tolerant than the second validation mechanisms 106-2, and the second validation mechanisms 106-2 are more fault tolerant than the first validation mechanisms 106-1.

The validation mechanisms 106 are next described.

For example, the validation mechanisms 106 may include, but are not limited to, one or more of: trusted identifier type validation mechanisms, syntax-type validation mechanisms, right-to update-type validation mechanisms, and the like.

For example, trusted identifier-type validation mechanisms may be used when specific identities or authorities are trusted to validate transactions or actions on a blockchain. Such trusted identifier type validation mechanisms may include, but are not limited to:
- Proof of Authority (PoA) validation mechanisms, where validators are trusted based on their identity and reputation.
- Delegated Proof of Stake (DPoS) validation mechanisms, where validators are elected based on trust by the token holders.
- Consortium blockchain validation mechanisms, where only pre-approved participants validate transactions.
- Permissioned Proof of Stake (PoS) validation mechanisms, where validators are pre-approved based on their identity.

In particular, of the above listed trusted identifier type validation mechanisms, PoA validation mechanisms, DPoS validation mechanisms and PoS validation mechanisms may be preferred as these trusted identifier type validation mechanisms are understood to function well in "closed" blockchain systems, for example where the validators are known as in the system 100. While consortium blockchain validation mechanisms, Proof of Stake Authority (PoSA) validation mechanisms and Proof of Reputation (PoR) validation mechanisms may be used, in closed blockchain systems such validation mechanisms may be redundant as validators and/or their reputation, are already known and/or pre-approved. Certain other types of trusted identifier type validation mechanisms, such as Self-Sovereign Identity (SSI) and/or decentralized identifier validation mechanisms, where identity is verified by trusted third parties, may not be compatible with closed blockchain systems as it may be preferred not to use trusted third parties that are outside the known validators. Hence, any suitable trusted identifier type validation mechanisms that are compatible with closed blockchain systems are within the scope of the present specification.

Furthermore, while trusted identifier type validation mechanisms may be generally preferred, syntax-type validation mechanisms may, in some examples, be used to determine whether data follows a predetermined format or structure before it is processed or accepted. In blockchain systems, syntax validation may assist with determining whether transactions, blocks, and other data adhere to specific rules and formats before being validated for correctness or added to a blockchain. Such syntax type validation mechanisms may include, but are not limited to:
- Transaction syntax validation mechanisms, in which fields of transactions are checked against a predefined syntax.
- Block header syntax validation mechanisms, in which block structure is checked against a predefined block structure.
- Smart contract syntax validation mechanisms, in which smart contract code format is checked against a predefined contract code format.
- Signature validation mechanisms, in which format of digital signatures are checked against a predefined format of digital signatures.
- Merkle Tree validation mechanisms, in which a tree structure for transactions is checked against a predefined tree structure.
- Token standard validation mechanisms, in which tokens of a blockchain are checked against a predefined standard, such as ERC-20/721 (Ethereum Request for Comment 20).
- Chain ID and/or Network ID validation mechanisms, in which identification of a target blockchain is checked against predefined identification formats.

Of the above listed syntax-type validation mechanisms, block header syntax, smart contract syntax validation mechanisms, signature validation mechanisms and/or Merkle Tree validation mechanisms may be preferred and/or may be most compatible with closed blockchain systems 100, such as the system 100. Hence, any suitable syntax-type validation mechanisms that are compatible with closed blockchain systems are within the scope of the present specification.

Again, while trusted identifier type validation mechanisms may be generally preferred, right-to-update type validation mechanisms may be used when authorized entities or participants are pre-validated and are provided with the ability to validate and/or update certain data, smart contracts, or configurations in a blockchain. Such right-to-update type validation mechanisms may include, but are not limited to:
- Owner-Based Contract Modification validation mechanisms, in which only a contract owner has the right to update certain aspects of a smart contract.
- Multisignature Wallets validation mechanisms, in which multiple authorized participants must approve updates or changes to a wallet associated with a blockchain.
- Permissioned Blockchains (Access Control) validation mechanisms, in which only pre-approved participants have the right to update the ledger or contracts.
- Time-Locked Updates validation mechanisms, in which updates are delayed to give stakeholders time to challenge or review before they are applied.
- Oracle-Based Updates validation mechanisms, in which only trusted oracles have the right to update smart contracts with off-chain data.
- Staking-Based validation mechanisms, in which validators with staked assets are granted the right to propose new blocks and update the blockchain.
- Role-Based Access Control (RBAC) validation mechanisms, in which only users with specific roles have the right to update certain parts of the blockchain.
- Off-Chain Governance with On-Chain Execution validation mechanisms, in which updates are proposed off-chain but executed by trusted on-chain participants.

However, any suitable right-to-update type validation mechanisms that are compatible with closed blockchain systems are within the scope of the present specification.

However, any suitable validation mechanisms 106 are within the scope of the present specification and in particular validation mechanisms 106 compatible with closed blockchain systems, such as the system 100.

It is further understood that some validation mechanisms 106 are less fault tolerant than other validation mechanisms 106. For example, fault tolerance in blockchain validation mechanisms may, in some examples, refer to an ability of a system to continue functioning correctly even when some of the nodes (e.g., validating devices and/or devices that maintain respective copies of a blockchain, and the like) are behaving incorrectly and/or in a faulty manner. For example, while such nodes are not depicted in FIG. 1, they may nonetheless understood to be present. In particular, fault tolerance of a validation mechanism may define how many nodes of a system can fail, and the like, before the system, and/or overall validation of a blockchain, becomes compromised. Herein, such nodes may be implemented by, and/or associated with, any suitable set of computing devices of the system 100.

A stricter validation mechanism can be deployed for more critical transactions that involve service provision or where a fault may disrupt a service that must be provided. Typical transactions of this type may be an issuance of an e-ticket or a reservation of a seat/room. In such cases, a Proof of Authority (PoA) mechanism or an equivalent mechanism with strict implementation rules is required. Furthermore, the authority mechanism may require, in addition to a mathematical condition (e.g., +50% of the validators), that the emission authority signs and validates the transaction (for example, the Travel Agency). Stricter algorithms may include a requirement that all participants validate the transaction (e.g., both the Travel Agency and the airline). In other use-cases beyond travel-related examples, these considerations apply analogously.

On the other hand, lighter mechanisms can be associated with blockchains where non-critical operations are processed, such as name modifications or auxiliary additions. In such cases, a simplified Delegated Proof of Stake (DPoS) mechanism may be sufficient. This allows for smooth and efficient processing of less-critical transactions.

Furthermore, various computing devices or associated actors are understood to be approved in the system 100 to act as nodes and/or actors for validating blockchains, for example to better provide interoperability and federation in the system 100, and such existing nodes and/or actors may automatically validate other nodes and/or actors. For example, automatic node validation may use scale-up features in which nodes associated with a given actor may introduce new nodes to increase the processing power in the system 100, and all such new nodes may be signed (e.g., approved using a signature scheme) as resources of the given actor) to act as validators in the system 100.

Validation mechanisms can act as either light or strict depending on the parameters chosen during implementation. For instance, a validation mechanism which is generally categorized as light (compared to another validation mechanism which is generally stricter than this light validation mechanism) could also be configured to be strict. Thus, implementations of the present methodologies may use the same validation algorithm, such as Proof of Authority (PoA), to realize a light and a strict validation mechanism, namely by changing parameters of the validation algorithm to configure the validation mechanism to be strict or to be light. For example, for lighter validation requirements, only 33% of validation approvals may be required. This specific implementation may be transformed to a higher degree of correctness (thus, lower fault tolerance) if among the 33% of validators, one validator is required to assert that this validator manipulates the stock (if the target backend is a market). In another example of a light validation mechanism, less than 50% of validators may be accepted if one of them asserts that it can ensure an ATOMIC transaction. For a stricter validation mechanism, for example, the validation algorithm may require approval of 50% of more of the validators.

Automatic node validation may furthermore support scale-out features in which established actors accept and validate new actors with new signatures (e.g., the new actors are accepted and/or validated using a signature scheme), and such scale-out features may enable interoperability in the system 100. For example, validation of new actors may include, but is not limited to, referencing, and/or providing access to, external data sources, any suitable databases 104 (e.g., providing legacy interoperability). Further interoperability provided by automatic node validation may include, but are not limited to, referencing, and/or providing access to, smart contracts used by other actors of same or related industries, as described herein; such referencing, and/or providing access to, such smart contracts may further include automatic acceptance of such smart contracts by the new actors, such that new actors, and/or associated nodes, may immediately participate in functionality of the system 100.

For example, some validation mechanisms 106 may tolerate up to a quarter of nodes failing, other validation mechanisms 106 may tolerate up to a third of nodes failing, while yet other validation mechanisms 106 may tolerate up to half of nodes failing. Hence, a lighter validation mechanism 106 may be more fault tolerant than a stricter validation mechanism 106 when the lighter validation mechanism 106 tolerates more faulty nodes than the stricter validation mechanism 106.

For example, use of DPoS validation mechanisms may increase fault tolerance (e.g., relative to other validation mechanisms) by allowing coin holders (e.g., actors, and the like, associated with blockchain transactions) to elect a small number of delegates (e.g., blockchain validators) who validate blockchain transactions to produce blocks of a blockchain 102. Such delegates may be quickly replaced if they act maliciously or fail in their duties, ensuring only trustworthy individuals remain in power. The frequent elections, incentive alignment, decentralized governance, and efficient consensus process of DPoS validation mechanisms all contribute to resiliency and security of the system 100, reducing the risk of centralization and making it harder for any single entity to control a blockchain 102.

Furthermore, fault tolerance of a hierarchical blockchain architecture, as in the system 100, where multiple blockchains 102 are organized in layers, may be enhanced compared to a single-layer blockchain.

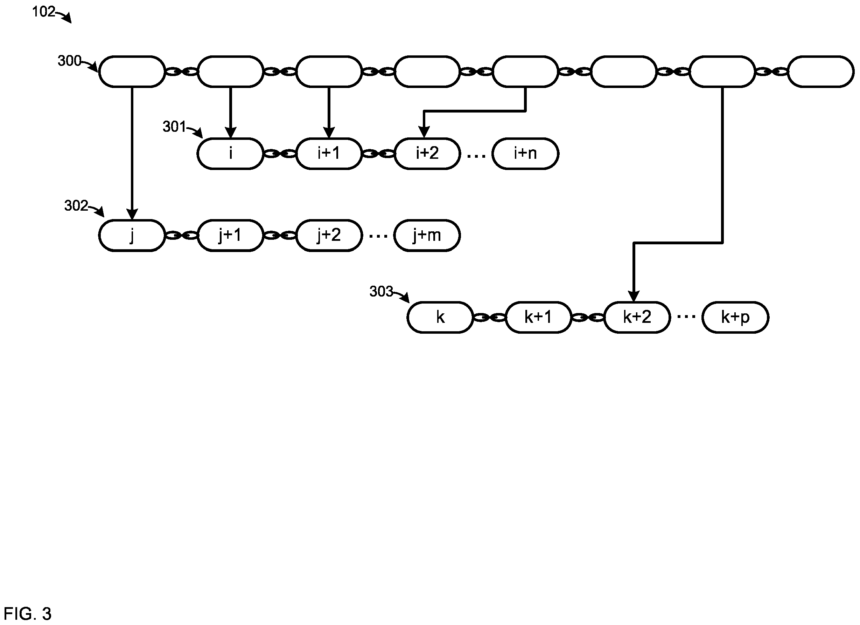

In a hierarchical blockchain architecture, each layer may add redundancy and improve fault tolerance by distributing the consensus process across multiple and/or sub-blockchains (e.g., see FIG. 3). A hierarchical blockchain architecture may reduce the impact of faults or attacks on any single layer, thereby enhancing overall resilience of the system 100. For example, a three-level hierarchical blockchain architecture may be more fault-tolerant than a single-layer blockchain architecture because a three-level hierarchical blockchain architecture may isolate and contain faults within specific layers, preventing them from affecting the entire system 100.

However, the exact increase in fault tolerance between the layers may depend on various factors, including the consensus mechanisms used at each layer, the number of nodes, and the interconnections between layers.

Alternatively, or in addition, fault tolerance may also be defined with reference to tolerating transaction failures, however, when a transaction fails in the system 100, (e.g., a transaction is not validated), the transaction will be rejected and will not be added to a blockchain.

Furthermore, it is understood that fault tolerance in a set of validation mechanisms 106 may be increased or decreased by respectively increasing or decreasing a number of validation mechanisms 106 in the set of validation mechanisms 106. Hence, for example, the first validation mechanisms 106-1 may comprise a higher number of respective validation mechanisms 106 than the second validation mechanisms 106-2, etc. Put another way, the higher the number of validation mechanisms 106 in a set of validation mechanisms 106 that are used to validate a particular blockchain 102, the lower the fault tolerance of the set of validation mechanisms 106.

Turning to the highest level blockchain 102-1 of the plurality of blockchains 102, the highest level blockchain 102-1 and one or more highest level associated databases 104-1, in the hierarchical relationship, are understood to respectively store main transactions 108 and respective associated main transaction information 110, which may be identified via respective identifiers 112. Associations between the main transaction information 110, and respective identifiers 112 are indicated via a broken line therebetween; indeed, this convention is used throughout the present specification.

In particular, the highest level blockchain 102-1 is understood to be associated with an intermediation server 114 (e.g., one or more computing devices, one or more cloud computing device, and the like) that intermediates between one or more client devices 116 and one or more provider systems 118. For example, a client device 116 may be operated by a user (not depicted) to communicate with the intermediation server 114 to request a search of provider objects provided by the one or more provider systems 118. The intermediation server 114 may receive search criteria from a client device 116 in one format, and modify the search criteria into one or more respective formats suitable for searching for provider objects at the one or more provider systems 118, which may require such search criteria to conform to different formats. The one or more provider systems 118 may provide results of respective searches to the intermediation server 114 in respective formats, and the intermediation server 114 may convert such results into a format suitable for the client device 116. Furthermore, once the client device 116 received the search results, the client device 116 may be operated to request and/or purchase a particular provider object from a particular provider system 118 via the intermediation server 114.

As used herein, the term "provider object" may refer to data objects and/or data records which correspond to products and/or items, such as travel-related goods and services (e.g., flights, hotel reservations, train reservations, bus reservations, ship and/or ferry reservations, car rentals and the like), provided by a provider system 118. More specifically, the products and/or items discussed in the examples below may be flight tickets, train tickets, bus tickets, ship and/or ferry reservations, car reservations and the like, amongst other possibilities, and hence a provider object may identify associated locations and times, that may include, but are not limited to, associated departure locations and destinations, and respective departure times and destination arrival times. The provider objects may be in any suitable format including, but not limited to Edifact recommendations in the context of Global Distribution System (GDS)-based data exchange, offer records in the context of New Distribution Capability (NDC)-based data exchange, and/or any other suitable format. Indeed, the provider objects may comprise data objects and/or data records, for example stored as an Edifact recommendation or an NDC offer, and/or any other suitable data representing at least one item provided by a provider system 118. Furthermore, provider objects corresponding to travel may include certain types of provider object identifiers, such as flight numbers, a reservation number, a booking reference number, and the like.

Furthermore, in this context, the term "provider system" may refer to any system that provides the aforementioned provider objects, and such provider systems may be operated by any suitable entity (e.g., actor), such as airlines, train companies, bus companies, ship and/or ferry companies, car reservation companies, amongst other possibilities.

However, any suitable types of provider objects and provider systems are within the scope of the present specification.

In particular, when a provider object is provided to a client device 116, the intermediation server 114 may communicate with a computing device 120 associated with the first blockchain 102-1 to: first add a main transaction 108 to the first blockchain 102-1; and add respective associated main transaction information 110 (e.g., to the first database 104-1) associated with the main transaction 108 only after the main transaction 108 is validated, for example via the first validation mechanisms 106-1.

The computing device 120 may comprise any suitable device (e.g., one or more servers and/or one or more cloud computing devices) that may comprise and/or maintains a blockchain wallet associated with the intermediation server 114 and/or that otherwise performs any suitable blockchain administrative tasks, such as adding a main transaction 108 to the first blockchain 102-1 according to a given architecture of the first blockchain 102-1, and the like. Furthermore, the computing device 120 may at least partially implement the first validation mechanisms 106-1, for example acting as a node for the first blockchain 102-1 and/or act as a node for any of the other blockchains 102 to assist with implementing any suitable set of other validation mechanisms 106.

Furthermore, it is understood that, as blockchain transactions 108 of the first blockchain 102-1 may be the basis for blockchain transactions of at least a portion remaining blockchains 102 in the hierarchical relationship (e.g., other than smart contracts), the blockchain transactions 108 of the first blockchain 102-1 are referred to herein as "main transactions".

For example, a main transaction 108 may represent providing a provider object to the client device 116 from a provider system 118, and the like.

Furthermore, while for simplicity, only one main transaction 108 is indicated, the first blockchain 102-1 may comprise any suitable number of main transactions 108 arranged in any suitable manner that conforms to a blockchain architecture. Indeed, the first blockchain 102-1 may comprise a beacon chain coupled to shards, with a given shard comprising main transactions 108 associated with a given provider system 118. Put another way, the first blockchain 102-1 may comprise a shard for each provider system 118. Such an architecture may be referred to as multi-sharding.

An example of multi-sharding is next described with brief reference to FIG. 3, which depicts an example blockchain 102 that comprises a beacon chain 300 and a plurality of shard chains 301, 302, 303. While only three shard chains 301, 302, 303 are depicted, the example blockchain 102 may comprise any suitable number of shard chains 301, 302, 303. Furthermore, respective shard chains 301, 302, 303 may be associated with respective provider systems 118, with a respective provider system 118 defining when and/or how a respective shard chain 301, 302, 303 is updated (e.g., hourly, daily, etc.).

Furthermore, in FIG. 3, it is understood that a transaction of the blockchain 102 is depicted as an oval, and transactions are depicted in a chain. While the transaction of the beacon chain 300 are unlabelled and/or unnumbered, the transactions of the shard chains 301, 302, 303 are numbered, respectively, from "i" to "i+n", from "j" to "j+m", and "k" to "k+p". Any suitable number of transactions may be added to respective shard chains 301, 302, 303, for example as provider objects are provided to a client device 116 by a respective provider system 118.

The beacon chain 300 is understood to comprise a central and/or primary blockchain that coordinates the overall blockchain 300. The example, the beacon chain 300 may be used to manage synchronization of respective transactions across multiple shard chains 301, 302, 303. Furthermore, a given shard chain 301, 302, 303 may depend from one or more transactions of a given transaction of the beacon chain 300 (e.g., as depicted, three transactions of the shard chain 301 depend from respective transactions of the beacon chain 300).

Furthermore, any suitable transaction of a given shard chain 301, 302, 303 may depend from any suitable transaction of the beacon chain 300. For example, as depicted, the "j" transaction of the shard chain 302 depends from the first transaction of the beacon chain 300, and the "k+2" transaction of the shard chain 303 depends from the second last transaction of the beacon chain 300.

Furthermore, the shard chains 301, 302, 303 are understood to comprise individual blockchains that may be updated and/or added to in parallel under the supervision of the beacon chain 300. Each shard chain 301, 302, 303 is understood to handle a portion of the transactions of the blockchain 300, allowing for more efficient scaling of the blockchain 102, for example as compared to blockchains where multi-sharding is not used. Hence, multi-sharding may lead to improved scalability, as each shard chain 301, 302, 303 may be used to process transactions independently of other shard chains 301, 302, 303.

Returning to FIG. 1, it is understood that associated main transaction information 110 may not be stored at the first database 104-1 until an associated main transaction 108 is validated. Such validation is described in further detail below.

Hence, as depicted, it is understood that the first blockchain 102-1 comprises main transactions 108 that have been validated, and the first database 104-1 stores associated main transaction information 110 and associated identifiers 112.

In the example of provider objects, it is understood that for each main transaction 108 that has been validated, where a main transaction 108 represents providing a particular provider object to a client device 116, the first database 104-1 stores a respective set of main transaction information 110 (e.g., records), which may comprise the particular provider object, and/or details thereof, and an associated provider object identifier 112 (e.g., a provider object type identifier).

In particular, because a set of main transaction information 110 (e.g., and an associated identifier 112) may be added to the first database 104-1 only after an associated main transaction 108 is validated at the first blockchain 102-1, other computing devices of the system 100, that may wish to update main transactions, as described hereafter, may perform such updates using the main transaction information 110 in a context of associated main transactions 108 having been previously validated.

For example, attention is next directed to the second highest level blockchains 102-2 of the plurality of blockchains 102 and the second highest level associated databases 104-2 in the hierarchical relationship. In particular, the second highest level blockchains 102-2 may stores updates 124 to main transactions 108 of the highest level blockchain 102-1, and the second highest level associated databases 104 may store respective associated updated main transaction information 124 in association with respective identifiers 126.

While in the context of blockchain terminology, the updates 122 may also be referred to as transactions, for simplicity, and so as not to confuse update transactions with the main transactions 108, the terminology "update" is used to represent an update transaction stored at the second highest level blockchains 102-2. While only one update 122 is indicated for simplicity, it is understood that each of the second highest level blockchains 102-2 comprise respective updates 122, and that each update 122 corresponds to a respective set of updated main transaction information 124 (e.g., records) and one or more associated identifiers 126.

For example, the system 100 may comprise a computing device 128 associated with the second highest level blockchains 102-2, which may, as depicted, be referred to colloquially as an orchestrator computing device 128. The orchestrator computing device 128 may be in communication with a plurality of update computing devices 130-1, 130-2, 130-3 (e.g., update computing devices 130 and/or an update computing device 130), which may be in a one-to-one relationship with the second highest level blockchains 102-2 (e.g., there are three second highest level blockchains 102-2 and three update computing devices 130). Each update computing device 130 may be associated with an entity that provides services and/or ancillary provider objects associated with the provider objects represented by the main transaction information 110 and associated main transactions 108.

For example, in the context of the travel industry, the update computing devices 130 may be associated with tracking entities and/or actors (e.g., an entity that tracks travel information associated with a provider object), payment entities and/or actors (e.g., an entity that may be used to pay for a provider object), ticketing entities and/or actors (e.g., an entity that provides tickets that correspond to provider objects), insurance entities and/or actors (e.g., an entity that provided insurance, such as travel insurance, for a provider object), a hospitality entities and/or actors (e.g., an entity that may provide lounge access and/or hotel accommodations, and the like, in association with a trip represented by a provider object), car rental entities and/or actors (e.g., an entity that provides car rentals in association with a trip represented by a provider object), airline entities and/or actors (e.g., that may be the same as a provider object entity of a provider system 118, and which may provide further ancillary services for provider objects issued by the provider system 118), and the like.

The update computing devices 130 may have access to the main transaction information 110 and associated identifiers 112, via the orchestrator computing device 128 which, as depicted, is in communication with the first database 104-1. Alternatively, or in addition, the orchestrator computing device 128 may be in communication with the first database 104-1 via the intermediation server 114.

While not depicted, the update computing devices 130 may communicate with the client devices 116 and/or the provider systems 118 (e.g., and such communication may or may not occur via the intermediation server 114) to offer ancillary provider objects to the client devices 116, for example in conjunction with the provider objects represented by the main transaction 108 and the main transaction information 110.

In particular, in order to offer ancillary provider objects associated with particular provider objects, the update computing devices 130 may access the main transaction information 110 and the associated identifiers 112 to determine which particular provider objects may be candidates for providing of an ancillary provider object. For example to sell insurance for a particular trip, an update computing device 130 may identify the trip via the main transaction information 110 and the associated identifiers 112, and due to an associated main transaction 108 being validated prior to associated main transaction information 110 being added to the first database 104-1, the update computing device 130 may operate with a high degree of confidence that main transaction information 110 represents a real provider object (e.g., and that the computing device 130 is not wasting processing resources and/or bandwidth in offering an ancillary provider object).

Similar to the operation of the intermediation server 114, the computing device 120, the highest level blockchain 102-1, and again using the travel industry example, when an ancillary provider object is provided to a client device 116, and/or associated with an existing provider object represented by the main transaction 108 and associated main transaction information 110, an associated computing device 130 may communicate with an associated computing device 132-1, 132-2, 132-3, associated with a respective second blockchain 102-2, for example via the orchestrator computing device 128, to: first add an update 122 to the an associated blockchain 102-2; and add respective associated updated main transaction information 124, associated with the update 122, only after the update 122 is validated, for example via the second validation mechanisms 106-2.

Indeed, put another way, one or more computing devices of the system 100 may include one or more orchestrator computing devices dedicated to populating second highest level blockchains 102 of the plurality of blockchains 102 and one or more second highest level associated databases 104-2 in the hierarchical relationship with updates to main transactions 108 of a highest level blockchain 102-1 and respective associated updated main transaction information 110.

Furthermore, similar to the computing device 120, the computing devices 132-1, 132-2, 132-3 (e.g., the computing devices 132 and/or a computing device 132) may comprise any suitable device (e.g., one or more servers and/or one or more cloud computing devices) that may comprise and/or maintains a blockchain wallet associated with a respective updated computing device 130, and/or that otherwise performs any suitable blockchain administrative tasks, such as adding an update 122 to an associated second blockchain 102-2 according to a given architecture of the associated second blockchain 102-2, and the like. Furthermore, the computing devices 132 may at least partially implement the second validation mechanisms 106-2, for example acting as a node for a respective second blockchain 102-2 and/or acting as a node for any of the other blockchains 102 to assist with implementing any suitable set of other validation mechanisms 106.

Furthermore, it is understood that for a given set of updated main transaction information 124, an associated identifier 126 may comprise one of the main transaction identifiers 112 (e.g., a provider object) and a respective identifier of an associated update transaction 122 and/or an associated ancillary provider object. Hence, the identifiers 126 may be at least partially of a different type than the identifiers 112.

Attention is next directed to the third highest level blockchain 102-3 of the plurality of blockchains 102 and the third highest level associated database 104 in the hierarchical relationship. In particular, the third highest level blockchains 102-3 may store management transactions 134 associated with the main transactions 108 of the highest level blockchain 102-1, and the third highest level associated database 104-3 may store respective associated management transaction information 136 and associated identifiers 138.

For example, the system 100 may comprise a computing device 140 associated with the third highest level blockchain 102-3, which may, as depicted, be referred to colloquially as a global orchestrator computing device 140. While not explicitly depicted, the global orchestrator computing device 140 may be in communication with the intermediation server 114, the provider systems 118, the update computing devices 130, and any other suitable devices of the system 100 (e.g., including, but not limited to, computing devices 142-1, 142-2 associated with the fourth blockchains 102-4).

The global orchestrator computing device 140 may furthermore have access to the information 110, 124 and associated identifiers 112, 126 at the databases 104-1, 104-2, via the orchestrator computing device 128 and/or by respective communication links to the databases 104-1, 104-2.

In particular, the global orchestrator computing device 140 may furthermore communicate with various suitable computing devices of the system 100, associated with different entities that have agreed to allow access to various suitable databases 104 therebetween, and store smart contracts representing such agreements. For example, the management transactions 134 may comprise such smart contracts and associated management transaction information 136 may store details of such agreements, along with associated identifiers 138. Hence, in contrast to the identifiers 112, 126, that may be related to provider objects, the identifiers 138 may comprise identifiers of the various entities and/or an identifier of an associated smart contract. Hence, the identifiers 138 may be of a different type than the identifiers 112, 126.

Put another way, a portion of blockchains 102 of third highest level blockchains 102-3 of the plurality of blockchains 102 may be dedicated to smart contracts between different entities that originate blockchain transactions.

It is further understood that, when a smart contract is to be stored, the global orchestrator computing device 140 may communicate with a computing device 144 associated with the third blockchain 102-3 to: first add a management transaction 134 to the third blockchain 102-3; and add respective associated management transaction information 136 associated with the management transaction 134 only after the management transaction 134 is validated, for example via the third validation mechanisms 106-3.

Like the computing device 120, the computing device 144 may comprise any suitable device (e.g., one or more servers and/or one or more cloud computing devices) that may comprise and/or maintains a blockchain wallet associated with the global orchestrator computing device 140 and/or that otherwise performs any suitable blockchain administrative tasks, such as adding a management transaction 134 to the third blockchain 102-3 according to a given architecture of the third blockchain 102-3, and the like. Furthermore, the computing device 144 may at least partially implement the third validation mechanisms 106-3, for example acting as a node for a respective third blockchain 102-3 and/or acting as a node for any of the other blockchains 102 to assist with implementing any suitable set of other validation mechanisms 106.

It is understood that one exception to validation mechanisms 106 of lower hierarchy blockchains being lighter than higher validation mechanisms 106, may be with respect to validation mechanisms 106 used to validate smart contracts, such as the third validation mechanisms 106-3 used to validate smart contracts of the third blockchains 102-3. For example, stricter validation mechanisms 106 may be preferred to validate smart contracts. In these examples, the third blockchains 102-3 may not be part of the hierarchical relationship between the remainder of the blockchains 102.

Attention is next directed to the fourth highest level blockchains 102-4 of the plurality of blockchains 102 and the one or more fourth highest level associated databases 104-4 in the hierarchical relationship. The fourth highest level blockchains 102-4 respectively stores application transactions 146 associated with the main transactions 108 of the highest level blockchain 102-1, and the fourth highest level associated databases 104-4 store respective associated application transaction information 148 and associated identifiers 150.

For example, the system 100 may comprise a plurality of application computing devices 142-1, 142-2 (e.g., application computing devices 142 and/or an application computing device 142), which may be in a one-to-one relationship with the fourth highest level blockchains 102-4 (e.g., there are fourth highest level blockchains 102-4 and two application computing devices 142). Each application computing device 142 may be associated with a respective entity that may implement applications with the provider objects represented by the main transaction information 110 and associated main transactions 108.

The application computing devices 142 may furthermore have access to the main information 110, 124 and associated identifiers 112, 126 at the databases 104-1, 104-2, via the orchestrator computing device 128 and/or by respective communication links to the databases 104-1, 104-2.

It is further understood that the intermediation server 114 and/or the devices 128, 140, 142 may have access to any suitable database 104, for example to facilitate searching of the databases 104 by the various components of the system 100.

Applications implemented via the application computing devices 142 may include, but are not limited to, identification management applications (e.g., in which identity of a user of a client device 116 may be verified), loyalty program applications (e.g., in which points are collected for trips, and/or spending, and the like), baggage tracking applications, (e.g., in which baggage on a trip is tracked), amongst other possibilities.

In general, such applications may not affect and/or update provider objects represented by any of the transactions 108 and/or the updates 122, however such applications may be implemented in association with such provider objects to provide services in association with such provider objects. For example, an identification management application may be used to verify an identity of a user of a client device 116 prior to providing a provider object, and/or a loyalty program application may be used to collect points in association with issuing and/or paying for a provider object, and/or a baggage tracking application may be used to track baggage on a trip represented by a provider object, and the like.

Hence, application transactions 146 may represent data used and/or generated by respective application computing devices 142, and the associated application transaction information 146 may comprise such data. Similarly, the associated identifiers 150 may comprise identifiers of such data, and/or a different identifier type as the other identifiers 112, 126, 138. In a particular example of an identification management application, an application transaction 146 and/or the associated application transaction information 146, may represent TrustedID^{™} data, and associated identifiers 150 may comprise TrustedID^{™} identifiers, and the like.

In this example, the application computing devices 142 may implement similar functionality as the computing devices 120, 132, 144, in addition to respective application functionality. Hence, the application computing devices 142 may comprise any suitable device (e.g., one or more servers and/or one or more cloud computing devices) that may comprise and/or maintain respective blockchain wallets and/or that otherwise performs any suitable blockchain administrative tasks, such as adding a respective application transactions 142 to respective fourth blockchains 102-4 according to a given architecture of the respective fourth blockchains 102-4, and the like. Furthermore, the computing devices 142 may at least partially implement the fourth validation mechanisms 106-4, for example acting as a node for a respective fourth blockchain 102-4 and/or acting as a node for any of the other blockchains 102 to assist with implementing any suitable set of other validation mechanisms 106.

Furthermore, similar to other computing devices of the system 100 that update blockchains and respective databases, an application computing device 142 may be configured to: first add an application transaction 146 to an associated blockchain 102-4; and add respective associated application transaction information 148, associated with the application transaction 146, only after the application transaction 146 is validated, for example via the fourth validation mechanisms 106-4.

Hence, in general, one or more computing devices of the system 100 are configured to: first add a blockchain transaction to an associated blockchain of the plurality of blockchains 102; and add information associated with the blockchain transaction to a respective database 104 only after the blockchain transaction is validated.

Indeed, such functionality may ensure trusted relationships between the various entities and/or associated computing devices, are maintained as the data stored at the databases 104 is understood to be validated.

Furthermore, it is understood that blockchains 102 that are lower in the higher hierarchical relationship may change more quickly than blockchains 102 that are higher in the higher hierarchical relationship, and hence validation mechanisms 106 that have relative decreased fault tolerance lower in the hierarchical relationship may allow for quicker validation in accordance with such faster change.

Furthermore, due to such trusted relationships, and decreasing fault tolerance of validation mechanisms 106 in the hierarchical relationship, more robust interoperability of the various computing devices of the system 100 may be enabled. Similarly, due to such trusted relationships various suitable computing devices of the system 100 may be granted access to at least a portion of the various databases 104 of the system 100 (e.g., that are not otherwise associated with such databases 104) to perform searching.

Hence, the architecture of the system 100 may generally enable improved interoperability between computing devices in industries with intensive data-processing needs. Similarly, the architecture of the system 100 may generally enable improved searching capability between computing devices in industries with intensive data-processing needs. Similarly, the architecture of the system 100 may generally enable improved scalability between computing devices in industries with intensive data-processing needs, for example as the rapidly changing data of the system 100 may be more easily accessible between such computing devices. Such improved scalability may be achieved, at least in part, using multi-sharding.

It is furthermore understood that the system 100 may comprise a federated-multilevel blockchain system comprising of at least three distinct layers: a kernel layer represented by the first blockchain 102-1 and database 104-1, a functional layer represented by the second blockchains 102-2 and databases 104-2 (and optionally by the third blockchain 102-3 and database 104-3), and an application-specific layer represented by the fourth blockchains 102-4 and databases 104-4. Each of the layers is understood to be tailored to address specific needs of industries with intensive data-processing needs. The architecture of this federated system may ensure not only efficiency but also scalability and interoperability, as described herein. It is understood that, as used herein, the term "federated" may refer to a system in which more than one entity may govern operation of the system, for example as agreed upon via smart contracts; as such, more than one entity may act as a validator; hence, it is understood that the validation mechanisms 106 herein may be implemented by any suitable set of nodes (e.g., computing devices) of the system 100.

As has already been described, the kernel layer may be configured to process transactions 108 and associated main transaction information 110 efficiently, for example using multi-sharding, which allows a blockchain 102 to be split into small and manageable parts (e.g., shards) where each shard is dedicated to a portion of transactions 108, for example for a specific provider system 118. Use of such shards may furthermore contribute to the system 100 being scalable. Furthermore, use of shards may enable an associated provider system 118 to control the shards of the first blockchain 102-1 that are specific to it, which make the kernel layer component flexible and suitable for different needs of different provider systems 118; such customizability may include, but is not limited to, a provider system 118 controlling how and when transactions 108 and/or associated information 110 is respectively added to the first blockchain 102-1 and the associated first database 104-1, and/or a format thereof.

The functional layer may comprise a multi-tool platform for managing associated updates 122 (e.g., update transactions) and associated information 124 securely and efficiently. The functional layer may improve how data-intensive industries like travel operate by using blockchain technology for complex, high-volume transactions. Ethereum^{™} forks may be used to dedicate different portions of a second blockchain 102-2 to various tasks such as managing transaction history, payments, hospitality and travel related tasks, etc. Furthermore, the computing devices 130 and/or the orchestrator computing device 128 may comprise, and/or use, dedicated search engines to quickly find transaction information 110 stored at the first database 104-1. Multi-sharding at blockchains 102-2 of the functional layer may further enable dividing the workload of the functional layer across different smaller blockchains 102-2, making the functional layer more efficient and ready to grow without slowing down or rejecting update transactions 122.

The application layer may provide specialized solutions tailored for different parts of the travel industry (such as managing IDs, loyalty programs and baggage tracking), and may use TrustedID^{™} to ensure that users' identities are verified safely and accurately. Again, the computing devices 142 may comprise, and/or use, dedicated search engines to quickly find information 110, 124 stored at respective databases 104-1, 104-2. Multi-sharding at blockchains 102-4 of the application layer may further enable dividing the workload of the application layer across different smaller blockchains 102-4 making the application layer more efficient and ready to grow without slowing down or rejecting transactions 146

Hence, the architecture of the system 100 may generally enable data to move freely between the different layers, and provide scalability, interoperability and advanced search capability.

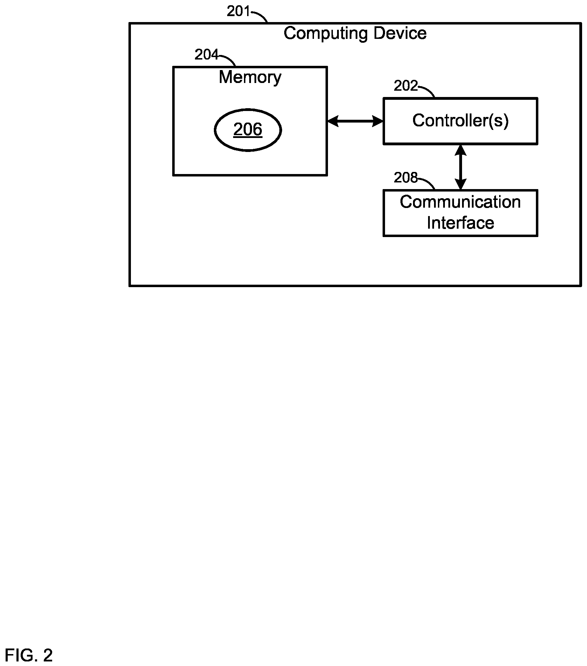

Turning to FIG. 2, certain components of a computing device 201 will be described. The components of such a computing device 201 may represent the components of any of the computing devices (e.g., and/or servers) of the system 100. While depicted as one device, the computing device 201 may comprise one or more computing devices and/or one or more servers and/or one or more cloud computing devices that may be geographically distributed.

As shown in FIG. 2, the computing device 201 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the computing device 201 to communicate with the other components of the system 100, though it is understood such communication may occur locally when components of the system 100 are combined. The communication interface 208 therefore may include any necessary components (e.g., network interface controllers (NICs), radio units, and the like) to communicate with components of the system 100. The specific components of the communication interface 208 may be selected based on upon a nature of one or more networks that the components of the system 100 use to communicate, and/or local communication between components of the system 100, and the like. The computing device 201 may also include input and output devices connected to the controller 202, such as keyboards, pointing devices, display screens, and the like.

The components of the computing device 201 mentioned above may be deployed in a single enclosure, or in a distributed format. In some examples, therefore, the computing device 201 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 201; regardless, the controller 202 is understood to have access to the memory 204.

Furthermore the application 206 may comprise computer-readable programming instructions, executable by the controller 202.

As will be understood by those skilled in the art, the controller 202 executes the instructions of the application 206 in order to perform a set of operations defined by the instructions contained therein including, but not limited to, functionality of any of the computing devices of the system 100 as described herein. In the description below, the controller 202, and more generally the computing device 201, are understood to be configured to perform such functionality. It will be understood that they are so configured via the execution (by the controller 202) of the instructions of the application stored in the memory 204. Put another way, the computing device 201 may comprise a computer-readable storage medium (e.g., a non-transitory computer-readable storage medium, such as the memory 204) having stored thereon program instructions that, when executed by the controller 202, causes the controller 202 to perform a set of operations for implementing functionality of any of the computing devices of the system 100 as described herein.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot perform maintain blockchains, amongst other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A system (100) comprising:
a plurality of blockchains (102) and associated databases (104) having a hierarchical relationship, wherein the plurality of blockchains (102), amongst hierarchical levels of the hierarchical relationship, are associated via one or more respective identifier types; and
one or more computing devices (114, 120, 126, 128, 140, 144, 142) configured to: populate the plurality of blockchains (102) and the associated databases (104); and validate the plurality of blockchains (102),
wherein the plurality of blockchains (102) are associated with different sets of validation mechanisms (106),
wherein respective blockchains (102) that are higher in the hierarchical relationship are associated with stricter validation mechanisms (106) and further respective blockchains (102) that are lower in the hierarchical relationship are associated with lighter validation mechanisms (106), and
wherein the lighter validation mechanisms (106) are more fault tolerant than the stricter validation mechanisms (106).

2. The system (100) of claim 1, wherein a highest level blockchain (102-1) of the plurality of blockchains (102) and one or more highest level associated databases (104-1) in the hierarchical relationship respectively store main transactions and respective associated main transaction information (110).

3. The system (100) of claim 1 or claim 2, wherein a second highest level blockchain (102-2) of the plurality of blockchains (102) and one or more second highest level associated databases (104-2) in the hierarchical relationship respectively stores updates to main transactions of a highest level blockchain (102-1) and respective associated updated main transaction information (124).

4. The system (100) of any one of claims 1 to 3, wherein a third highest level blockchain (102-3) of the plurality of blockchains (102) and one or more third highest level associated databases (104-3) in the hierarchical relationship respectively stores management transactions associated with main transactions of a highest level blockchain (102-1) and respective associated management transaction information (136).

5. The system (100) of any one of claims 1 to 4, wherein a fourth highest level blockchain (102-4) of the plurality of blockchains (102) and one or more fourth highest level associated databases (104-4) in the hierarchical relationship respectively stores application transactions associated with main transactions of a highest level blockchain (102-1) and respective associated application transaction information (148).

6. The system (100) of any one of claims 1 to 5, wherein the one or more computing devices (114, 120, 126, 128, 140, 144, 142) are further configured to:
first add a blockchain transaction to an associated blockchain (102) of the plurality of blockchains (102); and
add information associated with the blockchain transaction to a respective database (104) only after the blockchain transaction is validated.

7. The system (100) of any one of claims 1 to 6, wherein the one or more computing devices (114, 120, 126, 128, 140, 144, 142) include one or more orchestrator computing devices (128) dedicated to populating second highest level blockchains (102-2) of the plurality of blockchains (102) and one or more second highest level associated databases (104-2) in the hierarchical relationship with updates to main transactions of a highest level blockchain (102-1) and respective associated updated main transaction information (124).

8. The system (100) of any one of claims 1 to 7, wherein a portion of blockchains (102) of third highest level blockchains (102-3) of the plurality of blockchains (102) are dedicated to smart contracts between different entities that originate blockchain transactions.

9. The system (100) of claim 1, further comprising given blockchains (102-3) associated with smart contracts that are not a part of the hierarchical relationship.
